Europäisches Patentamt

(19) European Patent Office

Office européen des brevets

(11) **EP 0 940 373 A2**

## (12) EUROPEAN PATENT APPLICATION

(43) Date of publication:
08.09.1999 Bulletin 1999/36

(21) Application number: 99103748.2

(22) Date of filing: 26.02.1999

(51) Int. Cl.[6]: **C03B 37/012**, C03B 37/014,
C03B 19/02, C03B 19/14,
C03C 13/04, C03C 17/22,
C03C 23/00, H01S 3/06

(84) Designated Contracting States:
AT BE CH CY DE DK ES FI FR GB GR IE IT LI LU
MC NL PT SE
Designated Extension States:
AL LT LV MK RO SI

(30) Priority: 02.03.1998 JP 4909798
27.01.1999 JP 1792099

(71) Applicant: Hoya Corporation
Shinjuku-ku, Tokyo 161-0032 (JP)

(72) Inventors:
• Okada, Keiko
Akishima-shi, Tokyo 196-0022 (JP)
• Itoh, Katsuhisa
Ohme-shi, Tokyo 198-0062 (JP)

(74) Representative:
Werner, Hans-Karsten, Dr.Dipl.-Chem. et al
Patentanwälte
Von Kreisler-Selting-Werner
Postfach 10 22 41
50462 Köln (DE)

(54) **Method for manufacturing optical articles of chalcogenide glass and products produced thereby**

(57) An optical member, a glass fiber, and an optical amplifier, which are made of a sulfuric chalcogenide glass having no metamorphic layer on the surface, are provided by a manufacturing method including the steps of preparing a matrix made partially or entirely of a chalcogenide glass or oxychalcogenide glass, and attaching sulfur or sulfide to at least a portion of a surface of the matrix in a physical or chemical manner. A glass fiber is manufactured by a method including the steps of preparing a matrix made partially or entirely of a chalcogenide glass or oxychalcogenide glass, and attaching sulfur or sulfide to at least a portion of a surface of the matrix in a physical or chemical manner and concurrently drawing the matrix.

**Description**

**Background of the Invention**

1. Field of the invention

This invention relates to a method for manufacturing an optical member made of a chalcogenide glass or oxychalcogenide glass. Particularly, this invention relates to a method for manufacturing an optical member such as, for example, chalcogenide glass fiber or oxychalcogenide glass fiber. This invention further relates to a chalcogenide glass or oxychalcogenide glass based optical member having good chemical stability and mechanical strength. This invention also relates to a chalcogenide or oxychalcogenide based glass fiber having good mechanical property and low loss characteristics and an optical amplifier using such a glass fiber.

2. Description of Related Art

Generally, an optical member has one or more smooth surfaces and is molded in a shape corresponding to the usage thereof, so that the optical member requires fabrications such as polishing and thermal transforming during the manufacturing process. In such fabrications, raised first, as a problem is an occurrence of innumerable latent scratches on optical member surfaces due to polishing. This causes significant impairments of the mechanical strength in the optical member. Raised next as a problem is a creation of a metamorphic or deteriorated layer having a different composition from the inside due to physical or/and chemical reactions on a surface exposed to an open air during the thermal transformation. Oxidation etching or the like is widely used as a method for removing such the latent scratches and the metamorphic layers.

Metal sulfide chalcogenide glasses, because of having high solubility of ionic substances, can be doped with a relatively large amount of light emitting substances. The metal sulfide chalcogenide glasses are, therefore, getting attentions as a material that may replace arsenic-sulfuric glass currently produced as chalcogenide glass fibers having a low solubility of ionic substances. The sulfide based chalcogenide glass, however, tends to have less stable crystallization with a narrower glassing range than the arsenic-sulfuric glass, and the mechanical strength of the sulfuric chalcogenide glass may greatly suffer from foreign objects or latent scratches on the glass surface. When the sulfuric chalcogenide glass is fabricated with heat, the glass surface may readily be crystallized around the foreign objects or latent scratches as nucleuses on the glass surface, and if crystallized once, the glass is hardly molded. Another problem is that the chalcogenide glass creates on the surface a hydration layer or a metamorphic layer lacking sulfur due to oxidation etching for removing latent scratches and the metamorphic layer as different from an oxide glass. Such a hydration layer or a metamorphic layer is produced transitionally during the etching and raises a problem that the layer is chemically unstable and makes the surface easily crystallized as different from the inside composition. If the hydration layer or metamorphic layer lacking sulfur exists on the surface of the sulfuric chalcogenide glass, the surface is crystallized by radiation of light, oxygen, moisture, drying, temperature in the air, and in an extreme situation, weathering induces a structural breakdown, so that good optical members are hardly obtained. The sulfuric chalcogenide glass, though light emitting substances can be doped relatively in a larger amount into the chalcogenide glass, has not been known as to be manufactured as optical members from this reason.

As a method for removing a metamorphic layer existing on the glass surface and foreign objects clinging to the glass surface, polishing and etching processes over surfaces are widely employed. A polishing can be made to obtain a smooth surface for the purpose of use as an optical member. Polishing, however, causes latent scratches even where removing the metamorphic layer and foreign objects, and lefts the latent scratches unavoidably on the surface. If foreign objects cling to the glass surface or latent scratches remain on the glass surface, the glass greatly reduces the glass' mechanical strength. An oxidation etching is processed on the glass surface for removing such the latent scratches. In a case of an optical member made of a sulfuric chalcogenide glass, however, a hydration layer or so-called "metamorphic layer" lacking sulfur may be formed very at the vicinity of the glass surface by this process. Where the member is left over in the ordinary air atmosphere as the hydration layer or metamorphic layer lacking sulfur exists on the surface of the optical member, surface deterioration such as blurs or the like may be promoted. Where it is used as an optical member, radiation of light changes chemically the surface of the metamorphic layer, and in an extreme situation, it induces loss of transparency or structural breakdown, so that a good optical member is hardly obtained.

Another problem is when thermal fabrication is made the surface of the optical member is directly exposed to the atmosphere. To produce optical members made of the chalcogenide glass or oxychalcogenide glass, a method that an inert gas (rare gases and/or nitrogen gas) is used for atmosphere gases to avoid oxidation of the glass surface is used previously. One of the problems here is that a sulfide based chalcogenide glass readily volatilizes sulfur, thereby shifting the surface composition in comparison with the inside upon volatilization of the chalcogen elements such as sulfur from the surface of the optical member during thermal fabrication. Furthermore, when the glass member is heated to fabricate the glass member, the member reaches the crystallization temperature and promotes the crystallization. Accordingly, the surface is readily crystallized where the chalcogen elements such as sulfur are volatilized from the surface of the optical member and where the composition of the surface portion is deviated so much. In fact, heating actually deposited crystals, so that surface transparency loss or structural breakdown occurred, and so that no optical member is obtained with good property. Such a conventional method thus could not repair or avoid the latent scratches, metamorphic layers, and crystallization on the surface of the optical member, and it was inadequate to fill the thermal fabrication atmosphere with the inert gases without more. In some cases, the surface suffers from remarkable crystallization, so that, as a problem, fabrication itself becomes impossible.

As necessary property for surface processing, exemplified are that: first, the process will not increase micro undulation on the glass surface after removing the metamorphic layers, foreign objects, and latent scratches on the glass surface; second, the process will not promote latent scratches; and third, the process will not create any new metaphoric layer. When a surface process is made in dissatisfying those first to third conditions, glass stability may be deteriorated more than prior to the process, thereby weakening the strength.

A chalcogenide glass, in particular, a sulfide glass, if inadvertently subjected to a surface process, generates poisonous hydrogen sulfide, etc., in accompanied with surface reaction of the glass, and creates risks. Therefore, the surface processing method and the thermal fabrication should be designed in the light of compositions of the glass. In sum, no surface process method for sulfuric chalcogenide glass as a target has been known so far which satisfies the first to third conditions above and which is designed in consideration of safeness as well.

Meanwhile, optical fibers particularly among optical members receive attentions these days. For example, an inexpensive, high efficiency, 1.3-micron-meter band optical amplifier has lately been expected in the art of optical telecommunication. An optical fiber containing $Pr^{3+}$ ions as light emitting substances in the core of the fiber is currently, frequently used as a 1.3-micron-meter band optical amplification medium. An amplifier with very high efficiency can be fabricated by using the chalcogenide glass as a host glass to which the $Pr^{3+}$ ions are added. The chalcogenide glass, however, generally had property not to solve easily ionic substances. From this viewpoint, we have paid attentions, as a possible host glass capable of solving more ionic substances, some sulfide glasses in which sulfur is mainly used as the chalcogen element.

Meanwhile, to use such a chalcogenide glass as an optical amplification medium, the glass is required to be formed into a single mode optical fiber form. To fabricate the glass into an optical fiber, a method as disclosed in Japanese Unexamined Patent Publication (KOKAI) Showa No. 64-3,031, which is based on a process using a pot, has been used. Because the method disclosed in Japanese Unexamined Patent Publication Showa No. 64-3,031 is the process using a pot, a fiber having a core with a diameter of around 15 to 16 micron meters or less, which is particular to a single mode fiber, is hardly fabricated.

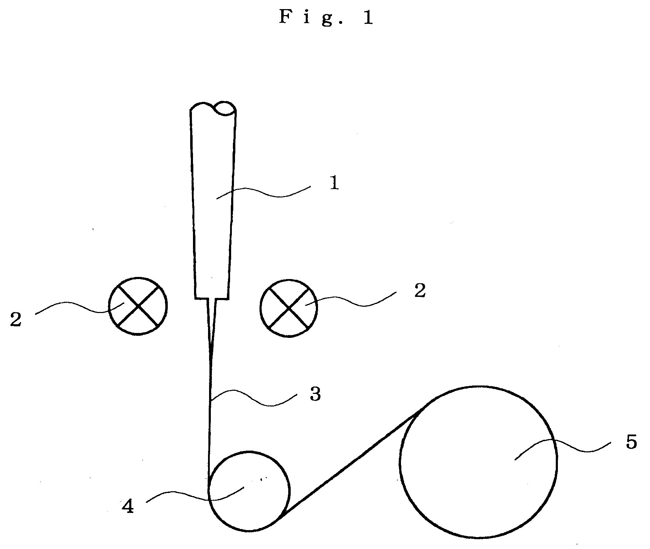

A general method to fabricate a single mode fiber is to form a preform with a large ratio of a clad diameter to a core diameter by a method of a rod-in-tube, extrusion, etc., and then to draw the preform into a fiber in applying heat to a part of the preform to soften the preform. That is, as shown in Fig. 1, in this method, a tip of a glass matrix 1 for optical fiber formed in a rod shape is heated in a heating furnace 2 to be spun, and an optical fiber 3 is drawn to be taken by a bobbin 5 as a winder through a winding capstan 4.

A problem raised from this preform method is first, that a hydration layer or metamorphic layer lacking sulfur may be formed on a surface of the preform or jacketing tube by oxidation etching before drawing. That is, although innumerable latent scratches exist on the surface of the preform or jacketing tube, those are removed by oxidation etching or the like before drawing because they may be a cause for significantly weakening the mechanical structure of the fiber. However, a hydration layer or so-called "metamorphic layer" lacking sulfur may be formed very at the vicinity of the glass surface of the preform or jacketing tube by this process. The sulfide based metal chalcogenide glass, however, tends to have less stable crystallization with a narrower glassing range than the arsenic-sulfuric glass, which is currently used as chalcogenide glass. If the hydration layer or metamorphic layer lacking sulfur exists on the surface of the preform or jacketing tube, the fiber surface is crystallized by the thermal spinning, and in an extreme case, the line may be broken due to loss of transparency, so that it was very hard to obtain a good fiber.

Another problem on the preform method is that, when drawn, the surface of the preform or jacketing tube is directly exposed to the gas phase atmosphere. To produce optical members made of the chalcogenide glass or oxychalcogenide glass, a method that an inert gas (rare gases and/or nitrogen gas) is used for atmosphere gases in a drawing machine to avoid oxidation of the glass surface is used so far. However, the sulfide based chalcogenide glass volatilizes sulfur easily, and the chalcogen element such as sulfur volatilizes from the surface of a preform rod or jacketing tube during drawing, thereby raising a problem that the surface composition would be deviated from the inner composition. When the glass matrix is heated to spin the fiber, the temperature comes closer to the crystallization temperature, thereby promoting crystallization. The surface is therefore extremely easily made crystallized upon excessive deviation of the surface composition where chalcogen element such as sulfur volatilizes from the surface of the preform rod or jacketing tube. In fact, heating deposits the crystallization, thereby lowering the fiber strength, and making a good fiber not obtainable. Where a preform is produced by an extrusion molding method, because the core glass and at least one sheet or more clad glass surface are exposed to the gas phase atmosphere directly, it raises a problem that such a crystal grows at boundaries between the core and the clad and/or between the clad and the clad of the extrusion molded preform rod obtained from a thermal press molding.

As described above, with the conventional method, there were problems that the method could not repair the metamorphic layer or avoid crystallization of the surface and the boundaries of the preform or jacketing tube, and in some case, drawing itself becomes impossible due to large surface crystallization. Even what was drawn still may generate crystal and foreign objects at boundaries between the core and the clad and/or between the clad and the clad formed by the extrusion method or rod-in-tube method. Such crystal and foreign objects caused scattering of guided light, so that fibers with low loss could not be obtained. Thus, the conventional method could not produce a glass fiber made of the chalcogenide glass or oxychalcogenide glass having high strength and low loss without subjecting to crystallization of the surface and boundaries of between the core and the clad and/or between the clad and the clad. Therefore, an optical amplifier could not be practically used using a glass fiber having the chalcogenide glass or oxychalcogenide glass.

## Summary of the Invention

It is an object of the invention to provide a method for producing an optical member in fabricating a sulfuric chalcogenide glass matrix by a prescribed surface processing to satisfy the above first to third conditions to keep the stability in the optical member.

It is another object of the invention to provide a method for completely removing metamorphic layers, foreign objects, and latent scratches on the glass surface by a surface processing made to a sulfuric chalcogenide glass matrix to satisfy the above first to third conditions.

It is yet another object of the invention to provide an optical part made of a sulfuric chalcogenide glass having a smooth surface without any new metamorphic layer where metamorphic layers, foreign objects, and latent scratches are removed from the glass surface.

It is still other object of the invention to provide a method for manufacturing a glass fiber in drawing a glass fiber matrix made of a chalcogenide glass or oxychalcogenide glass, in which metamorphic layers existing on the surface of the glass fiber matrix can be repaired, in which the sulfur can be volatilized less from the matrix surface during drawing, and in which the glass fiber can be drawn in preventing the fiber from becoming crystallized.

It is a further object of the invention to provide a glass fiber made of the chalcogenide glass or oxychalcogenide glass having high strength and low loss in which no metamorphic layer is substantially formed on surfaces and at boundaries between the core and the clad and/or between the clad and the clad.

It is yet another object of the invention to provide an optical amplifier using an optical fiber made of a glass fiber having high strength and low loss.

The foregoing objects are accomplished by the invention to provide a method for manufacturing an optical member including the steps of: preparing a matrix made partially or entirely of a chalcogenide glass or oxychalcogenide glass; and attaching sulfur or sulfide to at least a portion of a surface of the matrix in a physical or chemical manner. In this invention, the optical member can be fabricated subsequently to the above attachment.

In another form of the invention, a method for manufacturing an optical member includes the steps of: preparing a matrix made partially or entirely of a chalcogenide glass or oxychalcogenide glass; and attaching sulfur or sulfide to at least a portion of a surface of the matrix in a physical or chemical manner and concurrently fabricating the matrix.

In yet another aspect of the invention, a method for manufacturing a glass fiber including the steps of: preparing a glass fiber matrix made partially or entirely of a chalcogenide glass or oxychalcogenide glass; attaching sulfur or sulfide to at least a portion of a surface of the glass fiber matrix in a physical or chemical manner; and subsequently drawing the matrix into the glass fiber.

Furthermore, this invention concerns (a) an optical member including: an outer peripheral surface made of a chalcogenide glass or oxychalcogenide glass; and a surface having substantially no metamorphic layer; (b) a glass fiber including an outer peripheral surface made of a chalcogenide glass or oxychalcogenide glass; and the glass fiber having a tensile strength of 350 MPa or more; (c) a glass fiber including: an outer peripheral surface made of a chalcogenide glass or oxychalcogenide glass; and a clad having a minimum curving radius of 7 mm where a diameter of the clad is 125 microns; and (d) a glass fiber including an outer peripheral surface made of a chalcogenide glass or oxychalcogenide glass; and the glass fiber having scattering loss of guided light in 1.3 micron meter wavelength range of 3.0 dB or less.

In addition to the above, this invention relates to an optical amplifier having the glass fiber according to this invention above having at least a core and a clad which include light emitting substances, and an exciting light source for exciting the light emitting substances included in the core and the clad.

## Brief Description of the Drawings

The above and other objects and features of the invention are apparent to those skilled in the art from the following preferred embodiments thereof when considered in conjunction with the accompanied drawings, in which:

Fig. 1 is an illustration showing a drawing apparatus for optical fiber to use a manufacturing method according to the invention.

## Detailed Description of the Preferred Embodiments

The method for manufacturing an optical member according to the invention, is a method in which sulfur or sulfide is attached to at least a portion of a surface of a matrix made partially or entirely of a chalcogenide glass or oxychalcogenide glass in a physical or chemical manner (hereinafter, the attachment of sulfur or sulfide may be simply referred to as "surface processing"). Another method for manufacturing an optical member according to the invention includes a method for fabricating the optical member thus obtained from the above surface processing method. Another method for manufacturing an optical member according to the invention further includes a method doing fabrication concurrently with the above surface processing method. The manufacturing method for a glass fiber according to the invention is also a method for manufacturing a glass fiber in drawing a glass fiber matrix made partially or entirely of a chalcogenide glass or oxychalcogenide glass.

A matrix, according to the invention, made of partially or entirely chalcogenide glass or oxychalcogenide glass is known previously, and there is no restriction on the matrix. The chalcogenide glass and oxychalcogenide glass are sulfuric glasses in which ionic substances are highly soluble. The chalcogenide glass is expressed by, e.g., a general formula: $A^{3+}$ - $E^{+}$ -S, $A^{3+}$ - $D^{2+}$ - $E^{+}$ -S, $A^{3+}$ -S, wherein A denotes one or more elements selected from Ga, Al, and In; D denotes one or more elements selected from Cd, Ca, Sr, Ba, Pb, Zn and Hg; and E denotes one or more elements selected from Li, Na, K, Co, Rb and Ti. More specifically, exemplified as a chalcogenide glass are Ga-Na-S, Ga-Na-Cd-S, Ga-Ge-S, Ga-La-S, B-Na-S, Ga-Ge-La-S, Al-La-S, Ge-Na-S, etc. The oxychalcogenide glass is a glass that the chalcogenide glass further contains oxygen, and exemplified are glasses, e.g., Ga-Na-S-O, Ga-La-S-O, Ga-Ge-La-S-O, Al-La-S-O, etc.

The optical member according to the manufacturing method of the invention means: (1) a method in which the matrix is subject to a surface processing; (2) a method in which the matrix is subject to a surface processing and then fabricated; and (3) a method in which the matrix is subject to a surface processing and concurrently fabricated. Such an optical member includes an optical element fabricated to a form assembled in an optical system (e.g., fiber, lens, window plate, etc.) and an optical matrix (e.g., a preform, rod, tube, which are previous forms before drawn into fibers and a disc glass as a previous form fabricated into a preform).

The structure of the matrix is properly determined in corresponding to the structure of the optical member and whether the member is further fabricated, and for example, a disc shape, a rod shape, a sphere shape, a tube shape, a rectangular bar shape, and so on can be exemplified. The matrix can be produced by any known molding method such as cast molding, press molding, and extrusion molding, or fabricated by, e.g., a polishing method of a surface or end, etched by a method as described below, and may have metamorphic layers on the surface.

For the structure and production method of the glass fiber, the conventional structure and method can be used as it is. As a glass fiber matrix, for example, a preform rod, a rod-in-tube, and a jacketing tube are exemplified. The preform rod is a rod of a core-rod unity type in which a core glass is unitedly formed with a clad glass, and it is manufactured by, e.g., extrusion molding. The rod-in-tube is that the rod of the core glass is inserted in a hollow interior of the clad glass tube, and the core glass and the clad glass are unified during the drawing process though not unified at the stage of the matrix. The jacketing tube is that the preform rod is inserted in a hollow interior of the jacketing tube, and the preform rod and the jacketing rube are unified during the drawing process though not unified at the stage of the matrix.

The manufacturing method for an optical member according to the invention has a feature that sulfur or sulfide is attached to at least a portion of a surface of the matrix in a physical or chemical manner. The method for manufacturing a glass fiber according to the invention has a feature that a drawing process is made after sulfur or sulfide is attached to at least a portion of a surface of the glass fiber matrix in a physical or chemical manner. With the manufacturing method of the invention, the attachment method of the sulfur or sulfide onto the surface of the matrix can be done by physical attachment or chemical attachment. The chemical attachment includes a state in which the sulfur or sulfide reacts with the metamorphic layers existing on the surface of the matrix.

The attachment of the sulfur and sulfide to the matrix surface can be done by, e.g., contacting at least a portion of the matrix to a solution containing the sulfur or sulfide, or e.g., immersing it in the solution. As a sulfide, exemplified are allyl sulfide (liquid at room temperature), carbonyl sulfide (gas at room temperature), sodium hydrogen sulfide, nitrogen sulfide, diethyl sulfide, and the like. As a solvent for solution containing the sulfur or sulfide, for example, an organic solvent such as alcohol, ether, toluene, benzene, and the like can be used. In the case that the sulfide is liquid, the sulfide only can be used without diluting the sulfide with a solvent, but the sulfide can be diluted properly with a solvent. The solution containing the sulfur or sulfide can contain the sulfur and the sulfide of two types or more. The concentration of the sulfur or sulfide can be determined in consideration of the property and surface condition of the matrix, kind of the sulfur or sulfide, and so on.

Further heating or subjecting to light radiation of the matrix on which the sulfur or sulfide is attached using the above method may further attach chemically the sulfur or sulfide attached physically, or namely react the sulfur or sulfide. Conditions of the heating or light radiation can be determined properly in consideration of the property and surface condition of the matrix, kind of the sulfur or sulfide, and so on.

The attachment of the sulfur or sulfide onto the matrix surface can be done by, e.g., contacting at least a portion of the matrix to a melting fluid containing the sulfur or sulfide, or e.g., immersing it in the melting fluid. The melting point of the sulfur is about 150 °C, and the above attachment can be made when the matrix is dipped in the sulfur heated and melted at this temperature or more. For the sulfide, the above attachment can be made when the matrix is dipped in the melting material obtained by heating at the melting temperature or more. In consideration of the glass transition temperature, however, it is appropriate to set the temperature of the melting material at 500 °C or less.

With the method that the matrix is dipped in the melting material, the sulfur or sulfide is in general attached chemically to the matrix surface since a relatively high temperature is used. However, heating and light radiation can be added when necessary, and conditions of heating and light radiation can be determined properly in consideration of the property and surface condition of the matrix, kind of the sulfur or sulfide, and soon.

The attachment of the sulfur or sulfide onto the matrix surface can be done by, e.g., contacting at least a portion of the matrix to powders of the sulfur or sulfide to be statically absorbed. Static on the matrix can be built by frictions, or since the chalcogenide glass is a kind of semiconductors, it can be charged by applying electric field. The matrix can be charged by light radiation in utilizing the photoelectric effect. The powders of the sulfur or sulfide can be useful as far as attached to the matrix surface, and there is no special limitation on the diameter of powder particles.

Further heating or subjecting to light radiation of the matrix on which the powders of the sulfur or sulfide are attached using the above method may further attach chemically the powders of the sulfur or sulfide that have been attached statically, or namely may react with the surface. Conditions of the heating or light radiation can be determined properly in consideration of the property and surface condition of the matrix kind of the sulfur or sulfide, and so on.

The attachment of the sulfur or sulfide onto the matrix surface can be done by, e.g., contacting at least a portion of the matrix to a gas of the sulfur or sulfide to deposit the sulfur or sulfide. The sulfur easily sublimates at around temperature of 450 °C, and therefore, the sulfur can be deposited on a surface of the matrix where the matrix is in contact with sublimated sulfur (gas). The allyl sulfide, for example, other than the sulfur, has a boiling temperature of about 140 °C, and the allyl sulfide can be deposited on the surface of the matrix upon making the vaporized allyl sulfide in contact with the matrix. Tetra-nitrogen tetrasulfide sublimates at a temperature of 160 °C or more, and can be deposited on the matrix surface in a manner as described above.

Further heating or subjecting to light radiation of the matrix on which the sulfur or sulfide is deposited using the above method may further attach chemically the sulfur or sulfide that have been deposited, or namely may react with the surface. Conditions of the heating or light radiation can be determined properly in consideration of the property and surface condition of the matrix, kind of the sulfur or sulfide, and so on.

The attachment of the sulfur or sulfide can be done on an outer surface of the matrix. When the optical glass member is what has a hollow interior like a tube type, the attachment can be made on outer and inner surfaces of the tube. The attachment of the sulfur or sulfide can be made on an outer surface of a rod when the glass fiber matrix is a preform rod. The attachment of the sulfur or sulfide can be made on an outer-surface of a rod and inner and outer surfaces of a tube of a rod-in-tube when the glass fiber matrix is the rod-in-tube. The attachment can be made on inner and outer surfaces of the jacketing tube when the glass fiber matrix is a jacketing tube.

With the manufacturing method of the invention, the matrix can contain light emitting substances. The glass fiber, in the manufacturing method of the invention, can contain light emitting substances in either a core or a clad, or both. The light emitting substances can be known elements (ions) as light emitting substances for optical materials. Particularly, in the case of the glass fiber, the light emitting substances can be known elements (ions) as light emitting substances for optical fibers, and a glass containing light emitting substances can be used properly as a rod and/or a tube.

In the manufacturing method of the invention, the sulfur or sulfide attached to the surface in general is not left over the surface because the sulfur or sulfide sublimates or vaporizes except a used amount for repairing the metamorphic layer by the heating or light radiation processing. Where the sulfur or sulfide remains on the matrix surface, the matrix is preferably fabricated or drawn after the extricated sulfur or sulfide is removed from the matrix surface to which the sulfur or sulfide has been attached. The extricated sulfur or sulfide can be removed by rinsing the surface with an organic solvent such as alcohol, ether, toluene, benzene, etc. When the optical member has a structure in which the matrixes obtained by the invented manufacturing method are made adhere to each other, it is preferable to make adherence after the extricated sulfur or sulfide attached to the matrix surfaces to be made adhere to each other is removed, from a viewpoint for prevention of entry of foreign objects caused by the extricated sulfur or sulfide into the boundaries. When the glass fiber matrix is a rod-in-tube or a combination of a preform rod and a jacketing tube, it is preferable to draw the fiber after the extricated sulfur or sulfide attached to the outer surface of the rod and the inner surface of the tube in view of prevention of entry of foreign objects caused by the extricated sulfur or sulfide into the boundaries between the rod and the tube.

With the manufacturing method of the invention, the matrix surface can be etched before such attachment. Attachment of the sulfur or sulfide according to the invention on the etched glass surface can prevent foreign objects from occurring on the glass surface and the glass boundary of the adherence structure due to crystallization. Particularly, attachment of the sulfur or sulfide according to the invention on the etched glass fiber matrix surface can prevent foreign objects from occurring, due to crystallization, on either or both of the outer surface of the glass fiber and a boundary between the rod and tube.

In this invention, for example, as an etchant, an acid or a liquid containing compounds having reactive property with hydrogen chalcogenide can be used. The acid can be any of organic acid and inorganic acid. As an inorganic acid, for example, an acetic acid can be exemplified. As an inorganic acid, exemplified are, e.g., a hydrochloric acid, a nitric acid, a sulfuric acid, and a fluoric acid. A mixture of above acids can be used. An acid, particularly, an inorganic acid is powerful for solving the chalcogenide glass and oxychalcogenide glass. The concentration of the acid is preferably set in the range of 0.01 to 5 N [normals]. When the concentration is lower than that in the range, the etching speed becomes slow, and a thick hydration layer may be formed on the glass surface. In a case of a preform, the hydration layer may promote surface crystallization when the glass is drawn into a fiber. When the concentration is too high, the etching speed becomes too fast, thereby promoting latent scratches and increasing surface roughness.

As a compound reacting with hydrogen chalcogenide, exemplified is, e.g., a compound producing metallic sulfide insoluble in an oxidizing agent or an acid. As a compound producing metallic sulfide insoluble in an acid, exemplified is, e.g., a compound containing a rhodium (Rh). As oxidizing agents, exemplified are, e.g., chlorate, bromate, iodate, hypochlorite, permanganate, chromate, bichromate, hydrogen peroxide, percarbonate, and mixtures of those. It is to be noted that salts constituting those oxidizing agents are preferably salts highly soluble, such as a sodium salt, a potassium salt, etc. In addition to the above compounds, $La(NO_3)_3$, $.La(ClO)_3$, $BF_3$, and $Ce(BO_2)_4$, $Sn (BO_2)_4$, etc. as compounds of $Ce^{4+}$, $Sn^{4+}$, and $Pb^{4+}$ are exemplified. Those compounds reacting with hydrogen chalcogenide are appropriate to be solved to make a concentration of 0.01 mole per liter or greater. It is to be noted that the upper limit of the concentration is the saturated solubility, and to form a relatively high concentration, it is preferable to select a compound highly soluble in water.

An oxidizing agent has an effect, by quickly oxidizing the gas, to make harmless a hydrogen sulfide gas that produced when the glass is solved in the acid. It is therefore preferable to add the oxidizing agent more than the equivalent amount in accordance with an amount of the glass removed by etching. If an added amount is too small, sulfur is produced in the solution, thereby possibly increasing surface roughness of the member or item to be etched and generating hydrogen sulfide. An excessive additional amount does not raise such problems.

The etchant according to the invention can further include a compound having property suppressing solution speed in the etchant of at least one type of cations constituting the chalcogenide glass or oxychalcogenide glass. The cations constituting the chalcogenide glass or oxychalcogenide glass can be, as described below, e.g., ions of sodium, gallium, lanthanum, aluminum, etc. The compounds having property suppressing solution speed of those cations in the etchant are, e.g., compounds forming insoluble salts with those cations. As such compounds, exemplified for sodium are, e.g., halide, nitrate, sulfate, borate, phosphate, metaphosphate, uranyl acetate, etc., and for gallium, lanthanum, and aluminum, e.g., halide such as fluoride or the like, nitrate, sulfate, borate, phosphate, and metaphosphate. It is appropriate to use salts containing anions having less reducibility, because those compounds (salts), if containing anions having strong reducibility, may consume the oxidizing agents commonly added.

The compound has an effect to selectively prevent specific ion species from solving out of the glass. Therefore, if with respect to a glass containing a large amount of sodium ions, a compound having property suppressing solution speed of sodium ions in the etchant is used or if with respect to a glass containing gallium, aluminum, etc., as main components, a compound having property suppressing solution speed of the gallium and aluminum ions in the etchant is used, those ions would be prevented from solving out of the glass. A proper range of the additional amount of those compounds to the etchant is generally from 0.01 mole per liter to the saturated concentration, though an optimum amount may vary according to glass species and composition ratios.

The compound reacting with hydrogen chalcogen can be a salt. A cation constituting the salt can have property suppressing solution speed of at least one type of the cations constituting chalcogenide glass or oxychalcogenide glass in the etchant. As such a compound, exemplified are sodium chlorate, gallium chlorate, aluminum chlorate, sodium bromate, gallium bromate, aluminum bromate, sodium iodate, gallium iodate, aluminum iodate, sodium hypochlorite, gallium hypochlorite, aluminum hypochlorite, sodium permanganate, gallium permanganate, aluminum permanganate, sodium chromate, gallium chromate, aluminum chromate, sodium bichromate, gallium bichromate, aluminum bichromate, sodium hydrogen peroxide, gallium hydrogen peroxide, aluminum hydrogen peroxide, sodium percarbonate, gallium percarbonate, aluminum percarbonate, etc. A proper range of an additional amount of those compounds to the etchant is generally from 0.01 mole per liter to the saturated concentration.

The etchant according to the invention can contain other additives in addition to the above compositions. For example, to control the viscosity of the etchant, viscosity controlling agents such as glycerol, sodium silicate, polyvinyl alcohol, calcium sulfate, tetramethoxysilane, trimethoxysilane, tetraethoxysilane, etc., can be added to the etchant.

Although the above describes glass etching, etching methods other than the above can be used properly.

The fabrication of the optical member obtained from the surface processing of the matrix can be done by, e.g., rotational casting, pressing, extrusion molding, adherence, and molding by free fall. Any of such fabrication methods is known as a fabrication method for glass member, and in this invention, such a known method can be utilized in consideration of the glass composition. The molding by free fall is particularly suitable for fabrication done in parallel with the surface processing. For example, a matrix softened with heat is made free fall in a gas for surface processing, the surface processing and fabrication (molding of the matrix) can be done concurrently. The fabrication of the optical member whose surface is processed can be done in an atmosphere containing a hydrogen sulfide as described below in a description of the manufacturing method for glass fiber. A conventional drawing method can be used as it is for the drawing method in the manufacturing method for glass fiber of the invention. The atmosphere for drawing can be an atmosphere including a hydrogen sulfide as described below.

In the invented manufacturing method for glass fiber, the glass fiber can be produced upon partially heating, softening, and drawing the glass fiber matrix. A part of the glass fiber matrix can be drawn while so heated that the viscosity of the glass indicates, for example, $1 \times 10^5$ to $1 \times 10^8$ poises to manufacture the glass fiber. There is no special limitation on the atmosphere during drawing. In this manufacturing method, the preform rod can be made by softening a core and a clad glass of a sheet or more with heat and extruding with pressure the glass to make them united body. To be more specific, the rod can be so extruded with heat and pressure that the viscosity of the glass at a portion to be molded becomes, for example, $1 \times 10^5$ to $1 \times 10^8$ poises. There is no special limitation on atmosphere during molding.

A law of thermodynamics introduces that the evaporation speed of the sulfur from the glass surface becomes slower and the sulfur is vaporized less as the sulfur vapor pressure in the gas phase in contact with the glass surface is made higher. If the sulfur vapor pressure in the atmosphere is adjusted to the sulfur vapor pressure or more around the glass surface at the highest temperature that the glass fiber matrix for glass, preform rod, jacketing tube, etc. receives during drawing and/or molding, the sulfur is substantially suppressed from vaporizing from the glass surface. In the manufacturing method of this invention, when the glass fiber matrix to which the sulfur or sulfide is attached is drawn, the sulfur or sulfide is vaporized from the glass fiber matrix and decomposed to supply the hydrogen sulfide to the atmosphere as to control the sulfur vapor pressure. The sulfur element therefore can be suppressed from vaporizing from the glass surface, thereby eliminating deviations in glass compositions, which are otherwise induced due to vacancies of the sulfur elements. The fiber can be manufactured without depositing the crystals on the surface and boundaries.

With the manufacturing method of the invention, where the sulfur or sulfide gas is supplied from the matrix surface into the atmosphere in the fabrication machine such as a drawing machine or a molding machine (drawing or press molding done while the temperature is increasing), the gas filled in the fabrication machine such as the drawing machine or the molding machine can be an inert gas. The sulfur element can be supplied easily because the sulfur or sulfide is already attached to the surface even in the case of a glass species having the relatively low drawing temperature. The sulfur or hydrogen sulfide gas is effective because the gas is generated from the glass surface of the matrix for the glass, preform rod, jacketing tube, and soon, in which crystallization is suppressed. The hydrogen sulfide gas, even if solely used, can continue to supply the sulfur element onto the glass surface by reacting with the glass surface or being decomposed around the glass surface in a way as shown in the following formula:

$$H_2S \rightarrow H_2 + S.$$

According to glass species, however, strong reduction power of the hydrogen gas produced by the reaction above reduces metal ions having easily reducible property among glass constituting elements, thereby possibly producing crystallization due to rapid loss of stability against crystallization from ion changes in the glass structure. In such a case, it is preferable to make hydrogen turn into an inert compound by rendering the oxidizing gas coexist with the atmospheric gas.

Moreover, with the manufacturing method according to the invention, the sulfur vapor pressure in the atmosphere during fabrication such as drawing can be controlled by use or mixture of gas that makes the sulfur vapor pressure higher with the atmospheric gas when necessary.

As a source of sulfur, sulfur itself and a sulfuric compound, such as hydrogen sulfide, containing sulfur to create sulfur upon decomposition can be used. From a viewpoint to control sulfur's vapor pressure (concentration) in the atmosphere, it is desirable to use sulfur or hydrogen sulfide. When sulfur is used, the vapor pressure of sulfur (concentration) in the atmosphere can be controlled by properly diluting sulfur with inert gas or gases or the like in consideration of the maximum temperature that the preform receives during drawing. A sulfuric vapor (gas) of 0.01 to 100 % or a mixture gas of a sulfuric vapor (gas) and an inert gas (rare gas and nitrogen gas) can be used.

When a hydrogen sulfide is used, the concentration of the hydrogen sulfide to be supplied is controlled in consideration of the maximum temperature that the preform receives during drawing, because the hydrogen sulfide is thermally decomposed at and above about 400 degrees Celsius and provides a vapor pressure of sulfur according to the temperature. The sulfur's vapor pressure (concentration) can be therefore controlled to a desired value in the atmosphere. That is, the concentration of hydrogen sulfide to be supplied to the atmosphere can be determined in the light of temperature. A hydrogen sulfide gas of, e.g., 0.01 to 100 % or a mixture gas of a hydrogen sulfide and an inert gas (rare gas and nitrogen gas) can be used. Moreover, a mixture gas of a hydrogen sulfide, sulfur, and an inert gas can be used as an atmosphere gas. When a hydrogen sulfide is used or mixed in the atmosphere, it is preferable to decompose a part of the hydrogen sulfide by increasing the part to a temperature of 400 degrees Celsius or greater in advance.

When a hydrogen sulfide is used or mixed as a sulfur source, an oxidizing gas can be added together with the hydrogen sulfide for the purpose of promotion of sulfur supply by decomposition of the hydrogen sulfide and traps of the hydrogen gas (which indicates strong reducibility and may crystallize the glass) produced by the decomposition. As an oxidizing gas, exemplified are, e.g., oxygen, sulfur dioxide, sulfur trioxide, $POCl_3$, $SOCl_3$, halogen gas, sulfur hexafluoride, nitrogen dioxide, nitrogen monoxide, etc. It is appropriate to set the oxidizing gas to be 50 percent or less of the gas supply.

Some glass species do not reach a temperature such that hydrogen sulfide is decomposed to sufficiently supply sulfur element, or in other words, some glass species have a relatively low drawing temperature. For those glasses, it is desirable to premix the glasses with oxidizing gas capable of oxidizing hydrogen sulfide at around ordinary temperature, e.g., sulfur dioxide or the like, or to sufficiently decompose the hydrogen sulfide by heating the hydrogen sulfide itself in advance. An appropriate oxidizing gas such as sulfur dioxide has a concentration of 100 ppm to 50 mole percent (the same amount as hydrogen sulfide). When a hydrogen sulfide itself is preheated to be decomposed, the temperature is 400 degrees Celsius or greater.

Although the above description is for an example in which a gas like hydrogen sulfide is supplied as the atmosphere, an inert gas or the like is preferably used as the atmospheric gas from a viewpoint for easy treatment of the atmospheric gas.

The manufacturing method for glass fiber according to invention can be implemented by an apparatus basically having a heating furnace whose inside is capable of controlling the atmosphere, and a portion for pulling out the glass softened with heat. For example, as shown in Fig. 1, a tip of the preform 1 secured to a chuck member for preform is heated in a drawing furnace 2, and the optical fiber 3 can be produced by drawing an optical fiber 3 from the tip of the preform 1 by means of a capstan 4 and winding up the optical fiber 3 thus drawn with a bobbin 5. It is to be noted that the drawing furnace 2 has a structure capable of controlling the inside atmosphere though not shown.

With the manufacturing method for optical member according to the invention, surface processing can be done with a heating furnace whose inside is at least capable of controlling the atmosphere and in molding, when further processed, the glass matrix softened by heat (already surface processed) by extruding the matrix with pressure. This method can be implemented using an apparatus basically having a heating furnace and a molding section.

Optical member of the Invention

An optical member according to the invention is an optical member whose outer peripheral surface at least is made of chalcogenide glass or oxychalcogenide glass, and has a feature that the surface does not have substantially any metamorphic layer. The optical member of the invention having substantially no metamorphic layer on the surface can be obtained from the manufacturing method of the invention. A phrase "having substantially no metamorphic layer on the surface" means that in observation using a scanning electronic microscope, the surface undulation measured from the peak to the bottom is one micron or less. The surface of the optical member of the invention is very smooth and gross and can keep the smooth surface for a long time (six months or more) under an ordinary atmosphere.

The optical member of the invention includes an optical element fabricated in a formed that can be incorporated in an optical system (e.g., fiber, lenses, window plate) and an optical matrix (e.g., preform as a previous form before drawn into a fiber, rod, tube, and a disc glass as a previous form before fabricated into a preform).

The chalcogenide and oxychalcogenide glasses constituting the optical member are sulfuric glasses in which ionic substances are highly soluble. The chalcogenide glass is expressed by a general formula: $A^{3+}$ - $D^{2+}$ - $E^+$ -S, wherein A denotes one or more elements selected from Ga, Al, and In; D denotes one or more elements selected from Cd, Ca, Sr, Ba, Pb, Zn and Hg; and E denotes one or more elements selected from Li, Na, K, Co, Rb and Ti. More specifically, exemplified as a chalcogenide glass are Ga-Na-S, Ga-Na-Cd-S, Ga-Ge-S, Ga-La-S, B-Na-S, Ga-Ge-La-S, Al-La-S, Ge-Na-S, and so on. The oxychalcogenide glass is a glass that the chalcogenide glass further contains oxygen, and exemplified are glasses, e.g., Ga-Na-S-O, Ga-La-S-O, Ga-Ge-La-S-O, Al-La-S-O, and so on. The optical member according to the invention can contain light emitting substances when necessary. The light emitting substances can be selected from known elements (ions).

The optical member of the invention has a good surface shape and high mechanical strength. The optical member is highly reliable even where used for a long period, so that it is useful as a glass optical member such as a laser medium, an optical amplifier medium, a lens, an optical window, and so on.

Glass fiber of the Invention

The glass fiber of the invention is a glass fiber whose outer peripheral surface at least is made of chalcogenide glass or oxychalcogenide glass, and has a feature that the tensile strength is 350 PMa or more. A conventional product of a glass fiber whose outer peripheral surface at least is made of chalcogenide glass or oxychalcogenide glass had a tensile strength of about 280 MPa at most. To the contrary, the glass fiber of the invention has a tensile strength of 350 PMa or more, and this invention can provide a glass fiber of a tensile strength of 400 MPa or more. The glass fiber whose tensile strength is 200 MPa or less is easily folded and cannot bear practical use. If the tensile strength is 350 MPa or more, it can be handled well, and if the tensile strength is 400 MPa or more, handling becomes easy enough, thereby improving productivity when modules are produced using the fiber as advantages.

The glass fiber of the invention is a glass fiber whose outer peripheral surface at least is made of chalcogenide glass or oxychalcogenide glass, and has a feature that a clad has a minimum curving radius of 7 mm where a diameter of the clad is 125 microns. A conventional product of a glass fiber whose outer peripheral surface at least is made of chalcogenide glass or oxychalcogenide glass had a minimum curving radius of at least 10 mm where a diameter of the clad is 125 microns. To the contrary, the glass fiber of the invention has a minimum curving radius of 7 mm or less. The minimum curving radium is a permissive curve given to the fiber when the glass fiber is handled, and if the minimum curving radius exceeds 10 mm, such handling requires considerable precautions. If the minimum curving radius becomes 7 mm or less, the permissive curve during handling becomes larger, thereby advantageously widening the permissive range of module shapes.

The glass fiber of the invention is a glass fiber whose outer peripheral surface at least is made of chalcogenide glass or oxychalcogenide glass, and has a feature that the glass fiber having scattering loss of guided light in 1.3 micron meter wavelength range of 3dB or less. The glass fiber has substantially no crystallization layer not only on the surface but also at the boundaries between the core and clad and between clads, and therefore has a low loss feature not subjecting to scattering caused by crystals at the boundaries or foreign objects in terms of light guidance. As a result, an optical amplifier having good amplification characteristics can be provided using a glass fiber made of a chalcogenide glass or oxychalcogenide glass of the invention.

The glass fiber in which at least the outer peripheral surface is made of chalcogenide glass or oxychalcogenide glass makes, e.g., a glass fiber whose clad is chalcogenide glass or oxychalcogenide glass or whose core and clad are chalcogenide glass or oxychalcogenide glass.

The chalcogenide and oxychalcogenide glasses are sulfuric glasses in which ionic substances are highly soluble. The chalcogenide glass is expressed by a general formula: $A^{3+} - D^{2+} - E^+ -S$, wherein A denotes one or more elements selected from Ga, Al, and In; D denotes one or more elements selected from Cd, Ca, Sr, Ba, Pb, Zn and Hg; and E denotes one or more elements selected from Li, Na, K, Co, Rb and Ti. More specifically, exemplified as a chalcogenide glass are Ga-Na-S, Ga-Na-Cd-S, Ga-Ge-S, Ga-La-S, B-Na-S, Ga-Ge-La-S, Al-La-S, Ge-Na-S, and so on. The oxychalcogenide glass is a glass that the chalcogenide glass further contains oxygen, and exemplified are glasses, e.g., Ga-Na-S-O, Ga-La-S-O, Ga-Ge-La-S-O, Al-La-S-O, and so on.

The glass fiber according to the invention has at least a core and a clad, and the core and/or the clad may contain light emitting substances. The glass fiber can contain light emitting substances in either or both of the core and the clad. The light emitting substances can be known elements (ions) as light emitting substances for optical fiber.

As a glass fiber including light emitting substances only in the clad, a single mode fiber in which the center (about 1 micron diameter) of the core (about 4 micron diameter) containing light emitting substances is hollow, or a fiber whose center does not contain any light emitting substances may be used. In the fiber whose center is hollow, in terms of the structure, the hollow portion serves as a core, and a portion (of the core) containing the light emitting substances serves as a clad. The single mode fiber has high density for light transmission at the center, so that the light emitting mechanism may be deviated from proper operation if correlative action with the light emitting substances is too strong. In such as case, a glass fiber containing light emitting substances only in the clad would be a solution.

As a glass fiber containing the light emitting substances in both of the core and the clad, praseodymium is doped as the light emitting substances, thereby highly effectuating emission and amplification of the light. By doping praseodymium in the clad, there is an advantage that a portion of the light extruding from the core to the clad where the mode field of the transmission light is unable to be confined can be contributed to light emission and amplification.

The optical amplifier of the invention is an optical amplifier at least having a glass fiber containing light emitting substances in the core and/or the clad of the invention, and an exciting light source for exciting the light emitting substances contained in the core and/or the clad in the glass fiber. The exciting light source can be selected from known means corresponding to the light emitting substances.

Embodiments

Hereinafter, this invention is further described using embodiments.

Embodiment 1-1

Sulfuric chalcogenide glass including gallium sulfide ($Ga_2S_3$) 67 mol % and sodium sulfide ($Na_2S$) 33 mol % were polished to form the glass in a plate of 20 mm x 20 mm x 2 mm with optical surfaces, and subsequently, the glass was etched. This glass plate was dipped once in a carbon disulfide solution in which sulfur crystal is solved in a supersaturating manner and then placed in a furnace filled with nitrogen gas after lifted up from the solution. The carbon disulfide solution on the glass surface started to evaporate right after the glass was lifted up from the solution and sulfur crystal was left as attached on the surface. Subsequently, the glass surface was heated by a heater, the attached sulfur was sublimated, and the glass surface appeared with gross surface. The glass surface was observed as contained latent scratches of several marks /$mm^2$ (several hundreds /$cm^2$) with depth of 1 to 10 microns due to polishing before etching from an observation in use of a scanning electronic microscope, but after etching, no scratch was found. After etching, an interference film showing a blue color was created on the glass surface, and apparent composition deviations were observed on the surface, but the film disappeared by the surface processing of the embodiment. This surface was very smooth and gross when observed with the scanning electronic microscope and had undulation of one micron or less. The smoothness of this surface was maintained for a long time (one year or more) even in an ordinary atmosphere. No crystallization inside as well as on the surface was seen even where an Ar laser beam of 4880 nm, 10 mW was radiated for one hour, and the optical polished surface shape was maintained.
Where the surface was left as it was without covering the surface alter the above glass plate was etched, undulations were observed on the surface caused by micro crystal depositions. When an Ar laser beam of 4880 nm, 10 mW was radiated, sulfur gas was produced several minutes later while the radiated portion lost transparency, and crystallization was extended from the surface to the inside. In an ordinary atmosphere, the surface micro crystal further grew as time went on, as well as mechanical strength was weakened, and it was weathered as remaining no shape at the final stage.

Embodiment 1-2

After sulfuric chalcogenide glass in a rectangular bar of 2 mm x 2 mm x 20 mm was manufactured in the same manner as Embodiment 1-1, an etching process was performed. This glass rectangular bar was dipped in an ethyl alcohol liquid in which sodium was solved and hydrogen sulfide was saturated and then placed in a furnace filled with nitrogen gas after lifted up from the solution. Subsequently, sulfur dioxide of 0.5 % at volume ratio was mixed with nitrogen gas, and the opposite ends of the rectangular bar was heated by a heater. As the ethyl alcohol vapors, micro crystal of sodium hydrogen sulfide (NaHS) anhydrous salt started depositing on the surface. When light of wavelength 6328 nm was radiated, a blue interference color that has appeared on the surface after etching, was disappeared. The surface of the glass rectangular bar was very smooth and gross. The surface undulation was of one micron or less when observed with the scanning electronic microscope in the same manner as embodiment 1-1. The smoothness of this surface was maintained for a long time (one year or more) even in an ordinary atmosphere. No crystallization inside as well as on the surface was seen even where an Ar laser beam of 4880 nm, 10 mW was radiated for one hour, and the optical polished surface shape was maintained.
When the glass rectangular bar thus etched received light radiation without the above processing after etching, undulations were observed on the surface of the rectangular bar caused by micro crystal depositions Where the glass rectangular bar was left as it was in an ordinary atmosphere, the surface micro crystal is further grown as time went on and the glass bar was weathered as not to be handled. When an Ar laser beam of 4880 nm, 10 mW was radiated, sulfur gas was produced several minutes later while the radiated portion lost transparency, and crystallization was extended from the surface to the inside.

Embodiment 1-3

A sulfuric chalcogenide glass tube having a glass composition of gallium sulfide ($Ga_2S_3$) 67 mol % and sodium sulfide ($Na_2S$) 33 mol % made with an outer diameter of 10 mm, an inner diameter of 7 mm, and a length 200 mm, was manufactured by a rotational casting method, and subsequently, the glass was etched. This glass tube was dipped once in a carbon disulfide solution in which sulfur crystal is solved in a supersaturating manner and then placed in a furnace filled with nitrogen gas after lifted up from the solution. The carbon disulfide solution on the glass tube surface started to evaporate right after the glass tube was lifted up from the solution and sulfur crystal was left as attached on the surface. Subsequently, the glass tube was heated by a heater, the attached sulfur was sublimated, and the glass tube appeared with a gross interior and gross outer surface. Before the etching, the glass surface was observed as having foreign objects due to crystallization of about 10 pieces /mm$^2$ (one thousand /cm$^2$) from an observation in use of an optical microscope, but after etching, no foreign object was found. After etching, an interference film showing a blue color was created on the glass surface, and apparent composition deviations were observed on the surface, but the film disappeared by the surface processing of the embodiment. The smoothness of this surface was maintained for a long time (one year or more) even in an ordinary atmosphere. No crystallization inside as well as on the surface was seen even where an Ar laser beam of 4880 nm, 10 mW was radiated for one hour, and the optical polished surface shape was maintained.

Where the surface was left as it was without covering the surface after the above glass tube was etched, undulations were observed on the surface caused by micro crystal depositions. When an Ar laser beam of 4880 nm, 10 mW was radiated to the glass tube, sulfur gas was produced several minutes later while the radiated portion lost transparency, and crystallization was extended from the surface to the inside. In an ordinary atmosphere, the surface micro crystal further grew as time went on, as well as mechanical strength was weakened, and it was weathered as remaining no shape at the final stage.

Embodiment 1-4

A sulfuric chalcogenide glass rod having a glass composition of Ga$_2$S$_3$ 70 mol % and La$_2$S$_3$ 30 mol % made with an outer diameter of 10 mm and a length 200 mm, was manufactured by an extrusion molding method, and subsequently, the opposite ends are optically polished. After the glass rod was etched, static was built by rendering light frictions, and the rod was heated in a furnace filled with nitrogen gas after sulfur crystal of a micro powder type is attached to the surface. The processed rod was very smooth and gross. The smoothness of this surface was maintained for a long time (one year or more) even in an ordinary atmosphere. Before the etching, the glass rod side surface was observed as having foreign objects due to crystallization of about 10 pieces /mm$^2$ (one thousand /cm$^2$) from an observation in use of an optical microscope, but after etching, no foreign object was found. The opposite ends optically polished was observed as contained latent scratches of several marks /mm$^2$ (several hundreds /cm$^2$) with depth of 1 to 10 microns due to polishing before etching from an observation in use of an optical microscope, but after etching, no scratch was found. After etching, interference films showing a blue color were created on the side surface and opposite ends, and apparent composition deviations were observed on the surface, but the film disappeared by the surface processing of the embodiment. The obtained opposite ends of the glass rod were observed with the optical microscope, and consequently, no interference film was found, and the surfaces were very smooth and gross. The surface was continuously smooth for a long time (one year or more) even in an ordinary atmosphere. No crystallization inside as well as on the surface was seen even where an Ar laser beam of 4880 nm, 10 mW was radiated for one hour, and the optical polished surface shape was maintained.

Where the glass rod thus etched was left as it was without attaching the sulfur crystal onto the surface after the etching, micro crystal started to be deposited. In an ordinary atmosphere, the surface micro crystal further grew as time went on, and it was weathered as not to be handled in several months.

Embodiment 1-5

Sulfuric chalcogenide glass having a clad composition of gallium Ga 5 mol % and germanium 25 mol %, and sulfur 70 mol %, with an outer diameter of 15 mm and a thickness 5 mm was pressed to form a lens type preform, and then was etched. When the glass was placed in a container filled with nitrogen gas in accompany with solid sulfur and heated to a temperature of 150 °C, the solid sulfur was made fluid with yellow color. Where the chalcogenide glass preform was taken out of the liquid sulfur, a portion of the liquid sulfur attached to the surface was deposited in a powdery form as the preform was cooled, and therefore, the preform glass surface was rinsed with the carbon disulfide. After the preform glass was placed in a press molding apparatus filled with nitrogen gas, the glass preform was heated and press-molded to form an optical lens of 15 mm outer diameter and 5 mm thickness. As a result, no interference film was observed on the surface of the obtained lens with an optical microscope, and the surface was very smooth and gross. The smoothness of this surface was maintained for a long time (six months or more) even in an ordinary atmosphere. Where the chalcogenide glass preform thus etched was molded by extruding the preform as it was without dipping in the sulfur melting fluid after etching, crystal was found on the surface. The micro crystal started to be deposited. In an ordinary atmosphere, the surface micro crystal further grew on the glass rod as time went on, and the glass rod was weathered as not to be handled in several months.

EP 0 940 373 A2

Embodiment 1-6

Sulfuric chalcogenide glass having a clad composition of gallium Ga 5 mol % and germanium 25 mol %, and sulfur 70 mol %, with an outer diameter of 50 mm and a thickness 15 mm was molded by extrusion molding to form a disc, and after etched, the disc was sealed in the extrusion molding apparatus in which nitrogen gas was filled in advance and solid sulfur was placed near the heater. The extrusion molding apparatus was heated to sublimate the solid sulfur at a temperature of 450 °C or more, and the disc glass was deformed with heat and pressure upon confirmation of filling of the apparatus with sulfur atmosphere to mold a rod of the outer diameter of 10 mm and the length of 200 mm. The obtained glass rod had a smooth and gross surface. The smoothness of this surface was maintained for a long time (six months or more) even in an ordinary atmosphere. Where the disc glass thus etched was molded by extruding the disc as it was without dipping in the sulfur melting fluid after etching, crystal was found on the surface. In an ordinary atmosphere, the surface micro crystal further grew on the glass rod as time went on, and the glass rod was weathered as not to be handled in several months.

Embodiment 1-7

A sulfuric chalcogenide glass plate having a glass composition of gallium sulfide ($Ga_2S_3$) 65 mol % and sodium sulfide ($Na_2S$) 35 mol % polished in a plate of 20 mm x 20 mm x 2 mm with optical surfaces, and another sulfuric chalcogenide glass plate having a glass composition of gallium sulfide ($Ga_2S_3$) 65 mol % and sodium sulfide ($Na_2S$) 34 mol %, and praseodymium sulfide ($Pr_2S_3$) 1 mol % polished in a plate of 20 mm x 20 mm x 1 mm with optical surfaces were etched. When the glass plates were placed in a container filled with nitrogen gas in accompany with solid sulfur and heated to a temperature of 150 °C, the solid sulfur was made fluid with yellow color. Where the glass plates were taken out of the liquid sulfur, after the liquid sulfur attached to the outer surfaces was rinsed with the carbon disulfide, the glass plates were then placed in a furnace filled with nitrogen gas after lifted up from the solution. Subsequently, the furnace was drawn to the vacuum by a vacuum pump, and the glass plates were made adhere to each other where the two surfaces of the glass plates become gross upon heating. The obtained united glass plate had very smooth and gross outer surface and boundaries. The glass surface was observed as contained latent scratches of several marks /mm$^2$ (several hundreds /cm$^2$) with depth of 1 to 10 microns due to polishing before etching from an observation in use of a scanning electronic microscope, but after etching, no scratch was found. After etching, an interference film showing a blue color was created on the glass surface, and apparent composition deviations were observed on the surface, but the film disappeared by the surface processing of the embodiment. This surface was very smooth and gross. The smoothness of this surface was maintained for a long time (one year or more) even in an ordinary atmosphere. No crystallization inside as well as on the surface was seen even where an Ar laser beam of 4880 nm, 10 mW was radiated for one hour, and the optical polished surface shape was maintained.
Where the glass plates thus etched were fabricated as to make the plates adhere without dipping the plate in the liquid sulfur, crystal was found on the outer surface and the boundaries. With the unified glass plates in an ordinary atmosphere, the surface micro crystal further grew as time went on, and the unified glass plate was weathered as not to be handled in several months.

Embodiment 1-8

Glass having a composition of $Ga_2S_3$ 64 mol %, $Na_2S$ 32mol %, and CdS 4 mol % was melted in a glass carbon crucible, and the apparatus was filled with sulfur atmosphere where the solid sulfur sublimates at a temperature of 450 °C or more upon placing the solid sulfur near the heater. The melting liquid was made fall freely from a glass carbon tube having an inner diameter of 3 mm, and it was cooled naturally in the sulfuric atmosphere and molded into a true sphere having a diameter of about 1 mm, but the obtained glass ball had a smooth and gross surface. The surface was smooth for a long time (six months or more) even in an ordinary atmosphere. The glass ball obtained from free fall in an ordinary atmosphere without placing any solid sulfur in the furnace has the surface lacking gross and crystal was seen. With the glass ball in an ordinary atmosphere, the surface micro crystal further grew as time went on, and the glass ball was weathered as not to be handled in several weeks.

Embodiment 1-9

A sulfuric chalcogenide glass having a core composition of praseodymium sulfide ($Pr_2S_3$) 30 mol % and gallium sulfide $Ga_2S_3$ 70 mol % and a sulfuric chalcogenide glass having a clad composition of gallium Ga 5 mol % and germanium Ge 25 mol %, and sulfur 70 mol %, were produced. Both were optically polished in a disc shape of the outer diameter of 50 mm and the thickness of 15 mm and etched. The disc glasses of those two sheets were placed in a container filled with nitrogen gas in accompany with solid sulfur and heated to a temperature of 150 °C, the solid sulfur was made fluid with yellow color. Where the disc glasses were taken out of the liquid sulfur, the sulfur attached to the outer surfaces was rinsed with the carbon disulfide. The two disc glasses were overlapped and placed in an extrusion molding apparatus filled with nitrogen gas to deform the glasses with heat and pressure to mold them into a rod having an outer diameter of 10 mm and a length of 200 mm. The obtained glass rod had smooth and gross surface and core-clad boundaries. The surface remained smooth for a long time (six months or more) even in an ordinary atmosphere. The disc glass thus etched was molded by extrusion molding as it was without dipping it in a liquid sulfur, the surface and core-clad boundaries had crystallization. With the glass rod in an ordinary atmosphere, the surface micro crystal further grew as time went on, and the glass rod was weathered as not to be handled in several months.

Table 1 shows kinds of matrices and attachment method used in Embodiments 1-1 to 1-9 at a glance. Embodiments 1-3 (tube), 1-6 (rod), 1-9 (preform) can be used a preform for glass fiber, and therefore, the glass fiber can be manufactured by drawing the matrices.

Table 1

| Example | | | 1-1 | 1-2 | 1-3 | 1-4 | 1-5 | 1-6 | 1-7 | 1-8 | 1-9 |
|---|---|---|---|---|---|---|---|---|---|---|---|
| Optical member | Composition | | $Ga_2S_3$ 67 $Na_2S$ 33 | $Ga_2S_3$ 67 $Na_2S$ 33 | $Ga_2S_3$ 65 $Na_2S$ 35 | $Ga_2S_3$ 70 $La_2S_3$ 30 | Ga 5 Ge 25 S 70 | Ga 5 Ge 25 S 70 | $Ga_2S_3$ 65 $Na_2S$ 35 ($Na_2S$ 34 $Pr_2S_3$ 1) | $Ga_2S_3$ 64 $Na_2S$ 32 CdS 4 | core $Ga_2S_3$ 70 $Pr_2S_3$ 30 clad Ga5·Ge25·S70 |
| | Fabrication | | Polish | Polish | Rotational casting | Polishing both ends | Press | Extrusion molding | Adhering | Dropping | Extrusion molding |
| | Shape | | Glass plate | Glass rod | Tube | Rod | Lens | Rod | Glass plate | Glass ball | Preform |
| Treatment | Heat | | ○ | | ○ | ○ | | | | | |
| | Light irradiation | | | ○ | | | | | | | |
| Molding | | | | | | | ○ | ○ | ○ | ○ | ○ |
| Attaching method | CS2+S | | ○ | | ○ | | | | | | |
| | H2S gas | | | ○ | | | | | | | |
| | Solid S Static attachment | | | | | ○ | | | | | |
| | Solid S Fluid | | | | | | ○ | | ○ | | |
| | Solid S Sublimation gas | | | | | | | ○ | | ○ | ○ |

Embodiment 2-1

A core-clad united sulfuric chalcogenide glass preform rod having a clad composition of gallium sulfide ($Ga_2S_3$) 67 mol % and sodium sulfide ($Na_2S$) 33 mol % made with an outer diameter of 5 mm and a length 100 mm, was manufactured by an extrusion molding method. After the preform rod was etched, the preform rod was dipped once in a carbon disulfide solution in which sulfur crystal is solved in a supersaturating manner and then placed in a drawing apparatus filled with nitrogen gas in being lifted up from the solution. The carbon disulfide solution on the preform rod surface started to evaporate right after the preform rod was lifted up from the solution and sulfur crystal was left as attached on the surface. Subsequently, a tip of the preform rod was heated by a heater to spin a fiber, and an optical fiber was obtained with an outer diameter of 125 microns. The obtained optical fiber and the heated portion (neck down) of the preform rod had very smooth and gross surfaces. The smoothness of these surfaces was maintained for a long time (six months or more) even in an ordinary atmosphere. Results of tensile strength tests of this optical fiber indicated that the fiber had 407 MPa at both times immediately after spinning and one year later. The minimum curving radius was 5 mm or less. Some undulations were observed due to micro crystal deposition at the surface of the obtained optical fiber and the neck down portion of the preform rod where the rod was spun with heat as it was without covering the surface after the preform rod was etched. In an ordinary atmosphere, the surface micro crystal further grew as time went on in this optical fiber, as well as mechanical strength was weakened, and it was weathered as remaining no shape at the final stage. The tensile strength test result of this optical fiber indicated 265 MPa at a time right after spinning, and the minimum curving radius was 11 mm or less.

Embodiment 2-2

A sulfuric chalcogenide glass tube having a glass composition of gallium sulfide ($Ga_2S_3$) 65 mol % and sodium sulfide ($Na_2S$) 35 mol % made with an outer diameter of 10 mm, an inner diameter of 7 mm, and a length 200 mm, was manufactured by a rotational casting method, and subsequently the glass tube was etched. The glass tube was dipped once in a carbon disulfide solution in which sulfur crystal is solved in a supersaturating manner and then placed in a drawing apparatus filled with nitrogen gas in being lifted up from the solution. The carbon disulfide solution on the glass tube surface started to evaporate right after the glass tube was lifted up from the solution and sulfur crystal was left as attached on the surface. Subsequently, a tip of the glass tube was heated by a heater to spin a fiber, and an optical fiber was obtained with an outer diameter of 125 microns. The obtained optical fiber and the heated portion (neck down) of the glass tube had very smooth and gross surfaces. The smoothness of these surfaces was maintained for a long time (six months or more) even in an ordinary atmosphere. Results of tensile strength tests of this optical fiber indicated that the fiber had 419 MPa at both times immediately after spinning and one year later. The minimum curving radius was 5 mm or less. Crystallization was observed on the surface of the obtained optical fiber and the neck down portion of the glass tube where the tube was spun with heat as it was without covering the surface after the glass tube was etched. In an ordinary atmosphere, the surface micro crystal further grew as time went on in this optical fiber, as well as mechanical strength was weakened, and it was weathered as remaining no shape at the final stage. The tensile strength test result of this optical fiber indicated 261 MPa at a time right after spinning, and the minimum curving radius was 12 mm.

Embodiment 2-3

A core-clad united sulfuric chalcogenide glass preform rod having a clad composition of $Ga_2S_3$ 70 mol % and $La_2S_3$ 30 mol % made with an outer diameter of 6 mm and a length 200 mm, was manufactured by an extrusion molding method. After the preform rod was etched, the preform rod was dipped once in an ethyl alcohol solution in which sodium is solved and in which hydrogen sulfide was saturated and then placed in a drawing apparatus filled with nitrogen gas in being lifted up from the solution. Subsequently, sulfur dioxide of 0.5 % at volume ratio was mixed with nitrogen gas, and the tip of the preform was heated by a heater. While confirming that micro crystal of sodium hydrogen sulfide (NaHS) anhydrous salt started depositing on the surface as the ethyl alcohol vapors, spinning was made, and an optical fiber was obtained with an outer diameter of 125 microns. The obtained optical fiber and the neck down portion of the preform rod had very smooth and gross surfaces. The smoothness of these surfaces was maintained for a long time (six months or more) even in an ordinary atmosphere. Results of tensile strength tests of this optical fiber indicated that the fiber had 400 MPa at both times immediately after spinning and one year later. The minimum curving radius was 6 mm or less. Crystallization was observed on the surface of the obtained optical fiber and the neck down portion where the preform rod was spun with heat as it was without covering the surface after the preform rod was etched. In an ordinary atmosphere, the surface micro crystal further grew as time went on in this optical fiber, and it was weathered as not to be handled any more in several months. The tensile strength test result of this optical fiber indicated 252 MPa at a time right after spinning, and the minimum curving radius was 10 mm.

Embodiment 2-4

A core-clad united sulfuric chalcogenide glass preform rod for optical fiber having a clad glass composition of gallium sulfide 65 mol % and sodium sulfide 35 mol % made with an outer diameter of 10 mm and a length 200 mm, was manufactured. After the preform rod was etched, static was built by rendering light frictions, and the preform was placed in a drawing apparatus filled with nitrogen gas after sulfur crystal of a micro powder type is attached to the surface. Subsequently, a tip of the preform rod was heated with a heater and spun, and an optical fiber was obtained with an outer diameter of 125 microns. The obtained optical fiber and the neck down portion of the preform rod had very smooth and gross surfaces. The smoothness of these surfaces was maintained for a long time (six months or more) even in an ordinary atmosphere. Results of tensile strength tests of this optical fiber indicated that the fiber had 405 MPa at both times immediately after spinning and one year later. The minimum curving radius was 6 mm or less. Crystallization was observed on the surface of the obtained optical fiber and the neck down portion where the preform rod thus etched was spun with heat as it was without attaching sulfur crystal onto the surface after the preform rod was etched. In an ordinary atmosphere, the surface micro crystal further grew as time went on in this optical fiber, and it was weathered as not to be handled any more in several months. The tensile strength test result of this optical fiber indicated 283 MPa at a time right after spinning, and the minimum curving radius was 12 mm.

Embodiment 2-5

A core-clad united sulfuric chalcogenide glass preform rod having a clad composition of gallium Ga 5 mol % and germanium 25 mol %, and sulfur 70 mol % ,made with an outer diameter of 10 mm and a length 250 mm, was manufactured by an extrusion molding method and then etched. When the glass perform rod was placed in a container filled with nitrogen gas in accompany with solid sulfur and heated to a temperature of 150 °C, the solid sulfur was made fluid with yellow color. Where the chalcogenide glass preform was taken out of the liquid sulfur to place it in a drawing apparatus filled with nitrogen gas, a fiber was spun in substantially the same manner as in Embodiment 2-1, and an optical fiber was obtained with an outer diameter of 125 microns. The obtained optical fiber and the neck down portion of the preform rod had very smooth and gross surfaces. The smoothness of these surfaces was maintained for a long time (six months or more) even in an ordinary atmosphere. Results of tensile strength tests of this optical fiber indicated that the fiber had 397 MPa at both times immediately after spinning and one year later. The minimum curving radius was 7 mm or less. Crystallization was observed on the surface of the obtained optical fiber and the neck down portion where the preform rod was spun with heat as it was without covering the surface with sulfur crystal after the preform rod was thus etched. In an ordinary atmosphere, the surface micro crystal further grew as time went on in this optical fiber, and it was weathered as not to be handled any more in several months. The tensile strength test result of this optical fiber indicated 240 MPa at a time right after spinning, and the minimum curving radius was 13 mm.

Embodiment 2-6

A sulfuric chalcogenide glass tube having a glass composition of gallium sulfide ($Ga_2S_3$) 65 mol % and sodium sulfide ($Na_2S$) 35 mol % made with an outer diameter of 10 mm, an inner diameter of 5 mm, and a length 200 mm, was manufactured by a rotational casting method, and subsequently the glass tube was etched. When the glass tube was placed in a container filled with nitrogen gas in accompany with solid sulfur and heated to a temperature of 150 °C, the solid sulfur was made fluid with yellow color. The glass tube was placed in a drawing apparatus filled with nitrogen gas after the sulfur attached to the inner surface was rinsed with a carbon disulfide solution where the glass tube was taken out of the liquid sulfur. Then, a preform rod having a core composition of gallium sulfide ($Ga_2S_3$) 65 mol %, sodium sulfide ($Na_2S$) 34 mol % and praseodymium sulfide ($Pr_2S_3$) 1 mol % made with an outer diameter of 4 mm, and a length 200 mm, was manufactured by an extrusion molding method, and subsequently the preform rod was etched. When the glass perform rod was placed in a container filled with nitrogen gas in accompany with solid sulfur and heated to a temperature of 150 °C, the solid sulfur was made fluid with yellow color., The preform was placed in the glass tube located at the above drawing apparatus after the sulfur attached to the surface was rinsed with a carbon disulfide solution where the glass preform was taken out of the liquid sulfur. Tips of the glass tube and the preform rod were heated by a heater to spin a fiber, and an optical fiber was obtained with an outer diameter of 125 microns. The obtained optical fiber and the neck down portion of the glass tube had very smooth and gross surfaces. The smoothness of these surfaces was maintained for a long time (six months or more) even in an ordinary atmosphere. Results of tensile strength tests of this optical fiber indicated that the fiber had 402 MPa at both times immediately after spinning and one year later. The minimum curving radius was 7 mm or less. When the optical fiber was observed with an optical microscope, no crystal or foreign object was found at the boundary between the core and the clad, and no scattering light was seen even where a visible laser light was guided from an end surface. The loss in the guided light of the 1.3 micron wavelength range was as low as 2.0 dB/m. Crystallization was observed on the surface of the obtained optical fiber and the neck down portion where the glass tube and the preform rod were spun as they were without dipping in the sulfur liquid after the glass tube and the preform rod were etched. Such crystallization was also observed at the boundary between the core and the clad. Light was scattered in many places when a visible laser light was guided from an end surface. The loss in the guided light of the 1.3 micron wavelength range was as high as 15.0 dB/m. In an ordinary atmosphere, the surface micro crystal further grew as time went on in this optical fiber, and it was weathered as not to be handled any more in several months. The tensile strength test result of this optical fiber indicated 182 MPa at a time right after spinning, and the minimum curving radius was 18 mm.

Embodiment 2-7

A core-clad united chalcogenide glass preform rod for optical fiber having a clad composition of $Ga_2S_3$ 64 mol %, $Na_2S$ 32 mol %, CdS 4 mol % made with an outer diameter of 6 mm and a length 200 mm, was manufactured by an extrusion molding method. After the preform rod was etched, the preform rod was placed in a drawing apparatus filled with nitrogen. Although solid sulfur was placed near the heater in the drawing apparatus and heated to sublimate the solid sulfur at a temperature of 450 °C, the sublimated sulfur was aggregated on the surface since cooled around the preform. The preform was spun in substantially the same manner as Embodiment 1, and an optical fiber was obtained with an outer diameter of 125 microns. The obtained optical fiber and the neck down portion of the preform rod had very smooth and gross surfaces. The smoothness of these surfaces was maintained for a long time (six months or more) even `in an ordinary atmosphere. Results of tensile strength tests of this optical fiber indicated that the fiber had 430 MPa at both times immediately after spinning and one year later. The minimum curving radius was 4 mm or less. Crystallization was observed on the surface of the obtained optical fiber and the neck down portion where the preform rod was spun as it was without aggregation of sulfur on the surface after the preform rod thus etched was etched and placed in the drawing apparatus. In an ordinary atmosphere, the surface micro crystal further grew as time went on in this optical fiber, and it was weathered as not to be handled any more in several months. The tensile strength test result of this optical fiber indicated 277 MPa at a time right after spinning, and the minimum curving radius was 12 mm.

Embodiment 2-8

A sulfuric chalcogenide glass tube having an over-clad composition of gallium sulfide ($Ga_2S_3$) 65 mol % and sodium sulfide ($Na_2S$) 35 mol % made with an outer diameter of 13 mm, an inner diameter of 7 mm, and a length 200 mm, was manufactured by a rotational casting method, and subsequently the glass tube was etched. When the glass tube was placed in a container filled with nitrogen gas in accompany with solid sulfur and heated to a temperature of 150 °C, the solid sulfur was made fluid with yellow color. The glass tube was placed in a drawing apparatus filled with nitrogen gas after the sulfur attached to the inner surface was rinsed with a carbon disulfide solution where the glass tube was taken out of the liquid sulfur. Then, a glass rod having a clad composition of gallium sulfide ($Ga_2S_3$) 67 mol %, sodium sulfide ($Na_2S$) 32 mol % and praseodymium sulfide ($Pr_2S_3$) 1 mol % made with an outer diameter of 6.8 mm, and a length 200 mm, was manufactured by an extrusion molding method, and subsequently the preform rod was etched after a hole of 2.0 mm corresponding to a center core is bored and after a hole wall and an outer periphery surface were polished anhydrously. The glass rod was dipped once in the yellow fluid sulfur, and the glass perform rod was placed in a glass tube located in the drawing apparatus after the sulfur attached to the outer periphery surface was rinsed with a carbon disulfide solution. Tips of the over-clad glass tube and the core-clad rod were heated by a heater to spin a fiber, and an optical fiber was obtained with an outer diameter of 125 microns. The obtained optical fiber and the neck down portion of the glass tube had very smooth and gross surfaces. The smoothness of these surfaces was maintained for a long time (six months or more) even in an ordinary atmosphere. Results of tensile strength tests of this optical fiber indicated that the fiber had 400 MPa at both times immediately after spinning and one year later. The minimum curving radius was 7 mm or less. When the optical fiber was observed with an optical microscope, no crystal or foreign object was found at the boundary between the over-clad and the clad, and no scattering light was seen even where a visible laser light was guided from an end surface. The loss in the guided light of the 1.3 micron wavelength range was as low as 2.8 dB/m. Crystallization was observed on the surface of the obtained optical fiber and the neck down portion where the glass tube and the rod were spun as they were without dipping in the sulfur liquid after the glass tube and the rod were etched. Such crystallization was also observed at the boundary between the over-clad and the clad. Light was scattered in many places when a visible laser light was guided from an end surface. The loss in the guided light of the 1.3 micron wavelength range was as high as 18.0 dB/m. In an ordinary atmosphere, the surface micro crystal further grew as time went on in this optical fiber, and it was weathered as not to be handled any more in several months. The tensile strength test result of this optical fiber indicated 162 MPa at a time right after spinning, and the minimum curving radius was 25 mm.

Embodiment 2-9

A core-clad united sulfuric chalcogenide glass preform rod having a clad composition of gallium sulfide (Ga$_2$S$_3$) 66 mol %, sodium sulfide (Na$_2$S) 33 mol %, and praseodymium sulfide (Pr$_2$S$_3$) 1 mol % made with an outer diameter of 5 mm and a length 200 mm, was manufactured by an extrusion molding method. After the preform rod was etched, the preform rod was dipped once in a carbon disulfide solution in which sulfur crystal is solved in a supersaturating manner and then placed in a drawing apparatus filled with nitrogen gas in being lifted up from the solution. The carbon disulfide solution on the preform rod surface started to evaporate right after the preform rod was lifted up from the solution and sulfur crystal was left as attached on the surface. Subsequently a tip of the preform rod was heated by a heater to spin a fiber, and an optical fiber was obtained with an outer diameter of 125 microns. The obtained optical fiber and the heated portion (neck down) of the preform rod had very smooth and gross surfaces. The smoothness of these surfaces was maintained for a long time (six months or more) even in an ordinary atmosphere. Results of tensile strength tests of this optical fiber indicated that the fiber had 410 MPa at both times immediately after spinning and one year later. The minimum curving radius was 5 mm or less. Some undulations were observed due to micro crystal deposition at the surface of the obtained optical fiber and the neck down portion of the preform rod where the rod was spun with heat as it was without covering the surface after the preform rod was etched. In an ordinary atmosphere, the surface micro crystal further grew as time went on in this optical fiber, as well as mechanical strength was weakened, and it was weathered as remaining no shape at the final stage. The tensile strength test result of this optical fiber indicated 260 MPa at a time right after spinning, and the minimum curving radius was 12 mm or less.

Table 2 shows kinds of matrices and attachment method used in Embodiments 2-1 to 2-9 at a glance.

Table 2

| | | 2-1 | 2-2 | 2-3 | 2-4 | 2-5 | 2-6 | 2-7 | 2-8 | 2-9 |
|---|---|---|---|---|---|---|---|---|---|---|
| | Composition | Ga₂S₃ 67 Na₂S 33 | Ga₂S₃ 65 Na₂S 35 | Ga₂S₃ 70 La₂S₃ 30 | Ga₂S₃ 65 Na₂S 35 | Ga 5 Ge 25 S 70 | | Ga₂S₃ 64 Na₂S 32 CdS 4 | | Ga₂S₃ 64 Na₂S 32 Pr₂S₃ 1 |
| Details of Preform | core | Extrusion molding core-clad in one | Rotational casting tube | Extrusion molding core-clad in one | Extrusion molding core-clad in one | Extrusion molding core-clad in one | Extrusion molding rod | Extrusion molding core-clad in one | Boring | Extrusion molding core-clad in one |
| | clad | | | | | | Rotational casting tube | | Extrusion molding rod | |
| | over-clad | — | — | — | — | — | — | — | Rotational casting tube | — |
| Attaching method | CS2+S | ○ | ○ | ○ | | | | | | ○ |
| | H2S gas | | | | | | | | | |
| | Solid S Static attachment | | | | ○ | | | | | |
| | Solid S Fluid | | | | | ○ | ○ | | ○ | |
| | Solid S Sublimation gas | | | | | | | ○ | | |

According to the method for manufacturing optical member of the invention, with respect to the chalcogenide glass or oxychalcogenide glass, particularly, sulfide basis glass having a high solubility of ionic substances, glass optical member can be produced and be processed for surface processing without creating any crystal on the surface by suppressing volatilization of chalcogen elements (particularly, sulfur) from the optical member surface and concurrently preventing the surface from oxidizing and the composition of the surface from deviating. Therefore, a glass composition that so far could not be molded due to high volatilization from the glass surface at the thermal processing temperature can be used for manufacturing optical members, so that the method makes wider an area to be researched in optical characteristics of rich diversity in a wider glass composition area. At that time, processed substances are attached to the chalcogenide glass surface, and an inert gas is enough as fabrication and processing atmospheric gas, so that operation can be implemented with safety in use of an inexpensive installment.

According to the invention, an optical member made of sulfuric chalcogenide glass having a smooth surface can be produced by the above manufacturing method and the surface processing method. The optical member has a good surface shape, a high mechanical strength, is highly reliable even if used for a long time, and is a glass optical member such as a laser medium, an optical amplifier, an lens, an optical window, and so on.

According to the manufacturing method for the glass fiber of the invention, a glass fiber can be obtained by using a chalcogenide glass or oxychalcogenide glass, particularly, sulfide basis glass having a high solubility of ionic substances (e.g., Ga-Na-S(-O), Ga-Ge-S, Ga-La-S(-O), B-Na-S, Ga-Ge-La-S(-O), Al-La-S(-O), Ge-Na-S(-O))and drawing a fiber in avoiding problems such as fiber breakdown or the like caused by crystallization. The fiber thus obtained in this invented method has stable surfaces and boundaries, thereby having a high strength and low loss which is not given to the fiber made by a conventional method.

According to the invention, with respect to the chalcogenide glass or oxychalcogenide glass, particularly, sulfide basis glass having a high solubility of ionic substances, a fiber can be manufactured without creating crystal on the surface by suppressing volatilization of chalcogen elements (particularly, sulfur) from the surfaces of the preform or the tube and concurrently preventing the surface from oxidizing and the composition of the surface from deviating. Therefore, a glass composition that so far could not be made into a fiber due to high volatilization from the glass surface at the drawing temperature can be used for manufacturing a fiber, so that the method makes wider an area to be researched in glass compositions having a high light emitting efficiency for laser active substances with low loss. At that time, processed substances are attached to preform rod surface, and an inert gas is enough for drawing atmospheric gas, so that operation can be implemented with safety in use of an inexpensive installment.

The foregoing description of preferred embodiments of the invention has been presented for purposes of illustration and description, and is not intended to be exhaustive or to limit the invention to the precise form disclosed. The description was selected to best explain the principles of the invention and their practical application to enable others skilled in the art to best utilize the invention in various embodiments and various modifications as are suited to the particular use contemplated. It is intended that the scope of the invention should not be limited by the specification, but be defined claims set forth below.

## Claims

1. A method for manufacturing an optical member comprising the steps of:

   preparing a matrix made partially or entirely of a chalcogenide glass or oxychalcogenide glass; and
   attaching sulfur or sulfide to at least a portion of a surface of the matrix in a physical or chemical manner.

2. The method for manufacturing an optical member according to claim 1, wherein the optical member thus produced is further fabricated.

3. A method for manufacturing an optical member comprising the steps of:

   preparing a matrix made partially or entirely of a chalcogenide glass or oxychalcogenide glass; and
   attaching sulfur or sulfide to at least a portion of a surface of the matrix in a physical or chemical manner and concurrently fabricating the matrix.

4. A method for manufacturing a glass fiber comprising the steps of:

   preparing a glass fiber matrix made partially or entirely of a chalcogenide glass or oxychalcogenide glass;
   attaching sulfur or sulfide to at least a portion of a surface of the glass fiber matrix in a physical or chemical manner; and
   subsequently drawing the matrix into the glass fiber.

5. The method for manufacturing a glass fiber according to claim 4, wherein the glass fiber matrix is a preform rod, and wherein the sulfur or sulfide is attached to an outer surface of the preform rod.

6. The method for manufacturing a glass fiber according to claim 4, wherein the glass fiber matrix is a rod-in-tube, and wherein the sulfur or sulfide is attached to an outer surface of a rod of the rod-in-tube and one or more inner and outer surfaces of a tube of the rod-in-tube.

7. The method for manufacturing a glass fiber according to claim 6, wherein drawing is made after removal of extricated sulfur and sulfide attached at least to the outer surface of the rod and the inner surface of the tube.

8. The method for manufacturing a glass fiber according to claim 4, wherein the glass fiber matrix is constituted of a preform rod and a jacketing tube, and wherein the sulfur or sulfide is attached to an outer surface of the preform rod and inner and outer surfaces of the jacketing tube.

9. The method for manufacturing a glass fiber according to claim 8, wherein drawing is made after removal of extricated sulfur and sulfide attached at least to the outer surface of the preform rod and the inner surface of the jacketing tube.

10. The method for manufacturing an optical member or glass fiber according to any of claims 1 to 9, wherein a surface of the matrix is etched before the sulfur or sulfide is attached.

11. The method for manufacturing an optical member or glass fiber according to claim 10, wherein the matrix has latent scratches created by polishing on the surface of the matrix before processed by etching.

12. The method for manufacturing an optical member or glass fiber according to claim 10, wherein the matrix has a metamorphic layer created by a thermal process on the surface of the matrix before processed by etching.

13. The method for manufacturing an optical member or glass fiber according to any of claims 1 to 12, wherein the sulfur or sulfide is attached by making at least a portion of the matrix in contact with a solution containing sulfur or sulfide.

14. The method for manufacturing an optical member or glass fiber according to any of claims 1 to 12, wherein the sulfur or sulfide is attached by making at least a portion of the matrix in contact with a melting fluid of sulfur or sulfide.

15. The method for manufacturing an optical member or glass fiber according to any of claims 1 to 12, wherein the sulfur or sulfide is attached by making at least a surface of the matrix in contact with powders of sulfur or sulfide.

16. The method for manufacturing an optical member or glass fiber according to any of claims 1 to 12, wherein the sulfur or sulfide is attached by making at least a surface of the matrix in contact with a gas of sulfur or sulfide.

17. The method for manufacturing an optical member or glass fiber according to any of claims 1 to 16, wherein the matrix to which the sulfur or sulfide is attached is further subject to heating and/or radiation of light.

18. The method for manufacturing an optical member according to claim 2, wherein the optical member is fabricated after the extricated sulfur or sulfide is removed from the surface of the matrix to which the sulfur or sulfide is attached.

19. The method for manufacturing an optical member or glass fiber according to any of claims 1 to 18, wherein the chalcogenide glass or oxychalcogenide glass includes sulfur as a chalcogen element.

20. The method for manufacturing an optical member or glass fiber according to any of claims 1 to 19, wherein the chalcogenide glass is selected from groups on Ga-Na-S basis, Ga-Ge-S basis, Ga-La-S basis, B-Na-S basis, Ga-Ge-La-S basis, Al-La-S basis, and Ge-Na-S basis, and the oxychalcogenide glass is selected from groups on Ga-Na-S-O basis, Ga-Ge-S basis, Ga-La-S-O basis, Ga-Ge-La-S-O basis, and Al-La-S-O basis.

21. The method for manufacturing an optical member or glass fiber according to any of claims 4 to 14, wherein a core and/or clad of the glass fiber include light emitting substances.

22. An optical member comprising:

an outer peripheral surface made of a chalcogenide glass or oxychalcogenide glass; and

a surface having substantially no metamorphic layer.

23. The optical member according to claim 22, wherein the chalcogenide glass is selected from groups on Ga-Na-S basis, Ga-Ge-S basis, Ga-La-S basis, B-Na-S basis, Ga-Ge-La-S basis, Al-La-S basis, and Ge-Na-S basis, and the oxychalcogenide glass is selected from groups on Ga-Na-S-O basis, Ga-Ge-S basis, Ga-La-S-O basis, Ga-Ge-La-S-O basis, and Al-La-S-O basis.

24. A glass fiber comprising:

an outer peripheral surface made of a chalcogenide glass or oxychalcogenide glass; and

the glass fiber having a tensile strength of 350 MPa or more.

25. A glass fiber comprising:

an outer peripheral surface made of a chalcogenide glass or oxychalcogenide glass; and

a clad having a minimum curving radius of 7 mm where a diameter of the clad is 125 microns.

26. A glass fiber comprising:

an outer peripheral surface made of a chalcogenide glass or oxychalcogenide glass; and

the glass fiber having scattering loss of guided light in 1.3 micron meter wavelength range of 3dB or less.

27. The glass fiber according to any of claims 24 to 26, wherein the chalcogenide glass is selected from groups on Ga-Na-S basis, Ga-Ge-S basis, Ga-La-S basis, B-Na-S basis, Ga-Ge-La-S basis, Al-La-S basis, and Ge-Na-S basis, and the oxychalcogenide glass is selected from groups on Ga-Na-S-O basis, Ga-Ge-S basis, Ga-La-S-O basis, Ga-Ge-La-S-O basis, and Al-La-S-O basis.

28. The glass fiber according to any of claims 24 to 27, wherein the glass fiber includes at least a core and a clad, and wherein the core and/or clad include light emitting substances.

29. An optical amplifier comprising:

a glass fiber having at least a core and a clad which include light emitting substances and having an outer peripheral surface made of a chalcogenide glass or oxychalcogenide glass where the glass fiber having a tensile strength of 350 MPa or more or where a clad having a minimum curving radius of 7 mm where a diameter of the clad is 125 microns or where the glass fiber having scattering loss of guided light in 1.3 micron meter wavelength range of 3dB or less, and

an exciting light source for exciting the light emitting substances included in the core and/or clad of the glass fiber.

F i g . 1